# EUROPÄISCHE PATENTSCHRIFT

(11) **EP 4 045 339 B1**
(45) Veröffentlichungstag und Bekanntmachung des Hinweises auf die Patenterteilung: **01.02.2023**
(21) Anmeldenummer: 20838418.0
(22) Anmeldetag: 17.12.2020
(51) Int. Cl.: B60C 17/00, B60C 23/00, B60C 23/10

(54) **KRAFTFAHRZEUG**
MOTOR VEHICLE
VÉHICULE À MOTEUR

(43) Veröffentlichungstag der Anmeldung: 24.08.2022
(73) Patentinhaber: Fatih, Selahattin, 32051 Herford (DE)
(72) Erfinder: Fatih, Selahattin, 32051 Herford (DE)
(74) Vertreter: Ter Meer Steinmeister & Partner
(86) Internationale Anmeldenummer: PCT/EP2020/086774
(87) Internationale Veröffentlichungsnummer: WO 2022/128099

(56) Entgegenhaltungen:
- WO-A1-03/047890
- DE-A1- 3 601 103
- DE-A1- 4 140 704
- DE-U1- 9 106 548
- DE-U1- 9 109 984
- US-A- 5 730 177

## Beschreibung

Die vorliegende Erfindung betrifft ein Kraftfahrzeug gemäß dem Oberbegriff des Anspruchs 1.

Kraftfahrzeuge der vorliegenden Art umfassen in üblicher Weise ein Fahrgestell, in welchem eine Anzahl von Rädern mit einer Luftbereifung angebracht ist. Die Luftreifen der Räder sind mit Reifenventilen versehen, über welche sich die Reifen aufpumpen lassen. Dies geschieht üblicherweise über separate Kompressoren, wie sie in einer Fahrzeugwerkstatt oder an einer Tankstelle zur Verfügung stehen.

Darüber hinaus umfassen viele Kraftfahrzeuge, insbesondere Nutzfahrzeuge, ein fahrzeugeigenes Druckluftsystem, das zur Versorgung verschiedener pneumatischer Betriebseinrichtungen des Kraftfahrzeugs eingerichtet ist. Diese Betriebseinrichtungen umfassen zumindest einen Bremskreis und/oder eine Luftfederungsanlage.

Um beim Auftreten einer Reifenpanne einen Reifen provisorisch abdichten und wieder aufpumpen zu können, wird in vielen Kraftfahrzeuge überdies ein Notfall-Kit mitgeführt, in welchem eine Dichtmasse, die in den Reifen eingefüllt wird, sowie ein mobiler Kompressor zum Aufpumpen des provisorisch abgedichteten Reifens enthalten ist. Allerdings ist ihre Handhabung teils umständlich, zum anderen muss das Kit stets als separates Element im Fahrzeug mitgeführt werden. Da es selten gebraucht wird, wird es in der Regel an einer entlegenen Stelle verstaut, z.B. unter der Bodenabdeckung des Kofferraums, so dass es im Notfall nicht sofort einsatzbereit ist. Überdies nicht immer gewährleistet, dass der Kompressor nach längerer Lagerzeit im Fahrzeug bei Bedarf auch funktionstüchtig ist.

DE 36 01 103 A1 offenbart eine Druckluft-Reifenfüllanlage an einem geländegängigen Fahrzeug zum wahlweisen Erhöhen oder Absenken des Reifendrucks von jeweils mit einem Reifenventil versehenen Rädern. An jedem der Räder ist jeweils ein eigener, mit dem jeweiligen Reifenventil verbindbarer Reifenfüllschlauch zugeordnet, dem jeweils ein auf einem zentralen Bedienungspult angeordnetes Absperrorgan zugeordnet ist.

DE 91 09 984 U1 offenbart eine vergleichbare Druckluft-Reifenfüllanlage an einem geländegängigen Fahrzeug, mit ortsfesten, mit einem jeweiligen Reifenventil verbindbaren Reifenfüllschlauch, wobei die Reifenfüllschläuche mit Ventilen wahlweise einzeln oder in Gruppen absperrbar mit einer zentralen Druckluftquelle über eine Druckluftzuführungsleitung zu verbinden sind.

DE 91 06 548 U1 offenbart eine Steuereinrichtung zum Einstellen des Reifen-Luftdruckes an Kraftfahrzeugen.

Es ist daher eine Aufgabe der vorliegenden Erfindung, Mittel zur Behebung einer Reifenpanne zur Verfügung zu stellen, deren Handhabung gegenüber den herkömmlichen Notfall-Kits vereinfacht ist und welche die oben beschriebenen Nachteile nicht aufweisen, etwa hinsichtlich der Einsatzbereitschaft des Druckluftquelle zum Aufpumpen der Reifen.

Diese Aufgabe wird erfindungsgemäß durch ein Kraftfahrzeug mit den Merkmalen des Anspruchs 1 gelöst.

Das erfindungsgemäße Kraftfahrzeug umfasst selbst ein integriertes Notfallsystem zur provisorischen Druckluftbeaufschlagung der Reifen im Pannenfall. Dieses Notfallsystem umfasst eine Anzahl fest am Kraftfahrzeug installierter Druckluftanschlüsse, von denen jeder einen flexiblen Druckluftschlauch aufweist, dessen freies Ende an ein Reifenventil anschließbar ist. Im Nichtbenutzungszustand, d.h. während des üblichen Fahrzeugbetriebs, lässt sich dieser Druckluftschlauch vollständig im Kraftfahrzeug verstauen und im Pannenfall, also bei stehendem Fahrzeug daraus herausziehen. Jeder Druckluftanschluss wird durch das fahrzeugeigene Druckluftsystem gespeist.

Dieses integrierte Notfallsystem zeichnet sich zum einen dadurch aus, dass der oder die Druckluftanschlüsse so am Kraftfahrzeug angebracht werden können, dass sich mit jedem Druckluftschlauch im herausgezogenen Zustand ein Rad bequem erreichen lässt. Es ist daher nicht mehr nötig, stets einen separaten Kompressor für Notfälle mitzuführen, diesen bei einer Reifenpanne im Zubehör des Fahrzeugs zu suchen und am Rad anzuordnen. Zum anderen kann die ohnehin im Fahrzeug verbaute Druckluftquelle des fahrzeugeigenen Druckluftsystems zum Aufpumpen der Reifen verwendet werden.

Das erfindungsgemäße Notfallsystem ist somit in das fahrzeugeigene Druckluftsystem integriert und kann sich seinen Druckluftkreis gegebenenfalls mit anderen vorhandenen Druckluftkreisen teilen, etwa demjenigen des Bremskreises und/oder der Luftfederungsanlage. Daher kann auch die Steuerung des erfindungsgemäßen Notfallsystems durch fahrzeugeigene Steuer- und Eingabeelemente erfolgen, die die Druckluftverteilung innerhalb des fahrzeugeigenen Druckluftsystems steuern und die zum Aufpumpen der Reifen benötige Druckluft etwa durch eine geeignete Ventilsteuerung abzweigen.

Gemäß einer bevorzugten Ausführungsform der vorliegenden Erfindung umfasst das Notfallsystem eine Mehrzahl von Druckluftanschlüssen, die am Kraftfahrzeug verteilt angebracht sind und von denen jeweils ein Druckluftanschluss einem der Räder zugeordnet ist. Hier soll die "Zuordnung" des jeweiligen Druckluftanschlusses zu einem Rad einerseits eine räumliche Zuordnung bezeichnen, d.h. der entsprechende Druckluftanschluss ist an oder nahe dem betreffenden Rad am Kraftfahrzeug positioniert. Zum anderen handelt es sich auch um eine operative Zuordnung, dergestalt, dass der Schlauch dieses Druckluftanschlusses das Reifenventil des ihm zugeordneten Rades in jeder Drehstellung desselben erreichen kann. Der Abstand des Druckluftanschlusses vom Grad und die Länge des Druckluftschlauchs sind hierzu geeignet zu wählen.

Vorzugsweise umfasst das Kraftfahrzeug zwei in Fahrtrichtung vordere rechte und linke Räder und zumindest zwei hintere rechte und linke Räder, und das Notfallsystem umfasst entsprechend vier Druckluftanschlüsse, die an den, den jeweiligen Rädern entsprechenden Positionen vorn rechts und links und hinten rechts und links am Kraftfahrzeug angeordnet sind.

Weiter vorzugsweise umfassen die Druckluftanschlüsse jeweils ein Staufach zur Aufnahme des Druckluftschlauchs, das durch eine Klappe verschließbar ist.

Bevorzugt ist das Staufach im Unterboden des Kraftfahrzeugs vorgesehen und nach unten hin zu öffnen. Auf diese Weise wird eine optische Beeinträchtigung der Fahrzeugkarosserie vermieden.

Gemäß einer alternativen Ausführungsform ist das Staufach in einem Kotflügel des Kraftfahrzeugs vorgesehen und seitlich zu öffnen. In diesem Fall kaschiert die Klappe des Staufachs den Druckluftanschluss optisch.

Vorzugsweise ist der Druckluftschlauch ein sich selbsttätig in das Staufach einziehender Schlauch. Dies erleichtert das Verstauen des Druckluftschlauchs nach der Benutzung.

Gemäß einer weiteren Ausführungsform ist der Druckluftschlauch ein Spiralschlauch. Dieser kann spiralförmig oder schraubenförmig gewunden sein, so dass er sich elastisch aus dem Staufach herausziehen lässt, sich jedoch aufgrund seiner Rückstellkraft selbsttätig nach der Benutzung wieder in das Staufach einzieht.

Im Folgenden wird ein bevorzugtes Ausführungsbeispiel der vorliegenden Erfindung anhand der Zeichnung näher erläutert.
- Fig. 1: ist eine schematische Darstellung der Komponenten einer ersten Ausführungsform des erfindungsgemäßen Kraftfahrzeugs;
- Fig. 2: ist eine seitliche Teilansicht des Kraftfahrzeugs aus Fig. 1 im Bereich des vorderen rechten Rades;
- Fig. 3: zeigt schematisch ein Druckluftsystem zur Versorgung verschiedener Betriebseinrichtungen des Kraftfahrzeugs aus den Fig. 1 und 2 sowie des darin integrierten erfindungsgemäßen Notfallsystems;
- Fig. 4: ist eine schematische Darstellung der Komponenten einer zweiten Ausführungsform des erfindungsgemäßen Kraftfahrzeugs;
- Fig. 5: ist eine seitliche Teilansicht des Kraftfahrzeugs aus Fig. 4 im Bereich des vorderen rechten Rades; und
- Fig. 6: zeigt schematisch ein Druckluftsystem zur Versorgung verschiedener Betriebseinrichtungen des Kraftfahrzeugs aus den Fig. 4 und 5.

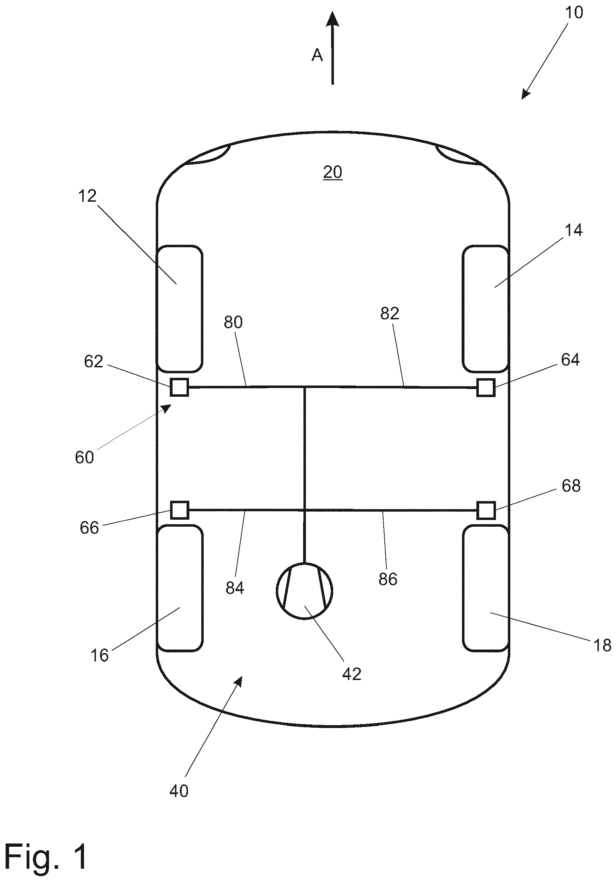

Fig. 1 zeigt schematisch ein Kraftfahrzeug 10 in einer Draufsicht. Es handelt sich hierbei um ein übliches Straßenfahrzeug mit vier Rädern 12, 14, 16, 18, die bezüglich der Fahrtrichtung (durch einen Pfeil A gekennzeichnet) vorn rechts und links und hinten rechts und links am nicht im einzelnen dargestellten Fahrgestell 20 des Kraftfahrzeugs 10 angeordnet sind.

Die Räder 12, 14, 16, 18 weisen eine Luftbereifung auf. Verliert einer der Reifen im Pannenfall Luft, so muss entweder das betreffende Rad gegen ein Ersatzrad getauscht werden oder der zum Druckverlust führende Reifendefekt muss provisorisch behoben werden, und der Reifen muss wieder aufgepumpt werden.

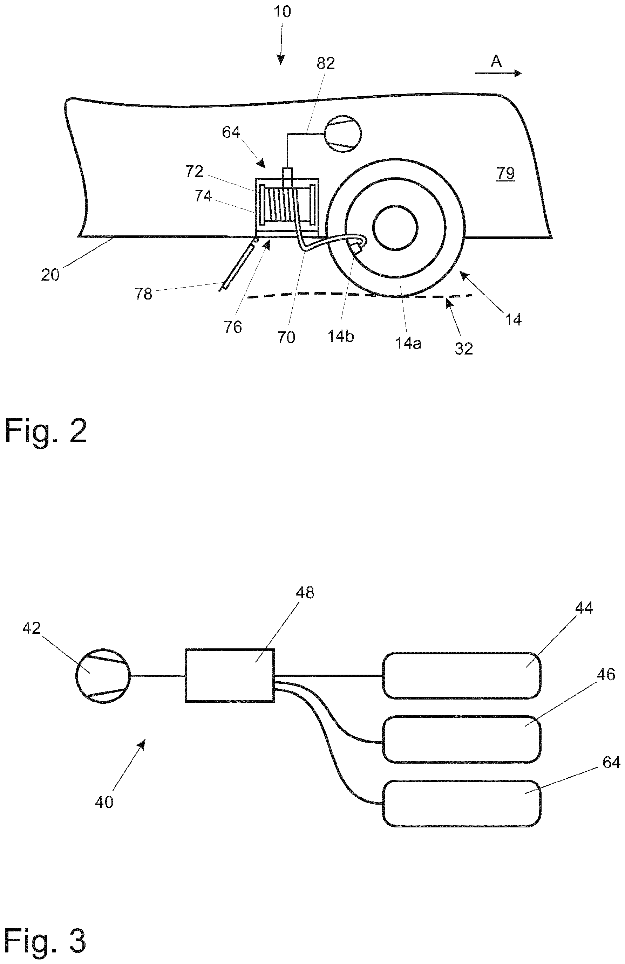

Für diesen Fall umfasst das Kraftfahrzeug 10 ein integriertes Notfallsystem 60 zur provisorischen Druckbeaufschlagung der Reifen der Räder 12, 14, 16, 18 im Pannenfall. Dieses Notfallsystem 60 umfasst eine Anzahl fest am Kraftfahrzeug 10 installierter Druckluftanschlüsse. Bei der vorliegenden Ausführungsform sind vier Druckluftanschlüsse 62, 64, 66, 68 vorhanden, von denen jeder Druckluftanschluss 62, 64, 66, 68 einem der vier Räder 12, 14, 16, 18 zugeordnet ist. Im Einzelnen ist somit ein vorderer linker Druckluftanschluss 62 dem linken Vorderrad 12 zugeordnet, ein vorderer rechter Druckluftanschluss 64 ist dem rechten Vorderrad 14 zugeordnet, ein hinterer linker Druckluftanschluss 66 ist dem linken Hinterrad zugeordnet, und ein hinterer rechter Druckluftanschluss 68 ist dem rechten Hinterrad 18 zugeordnet. Diese räumliche Zuordnung ist derart gewählt, dass der einem Rad 12, 14, 16, 18 zugeordnete Druckluftanschluss 62, 64, 66, 68 den Reifen dieses Rades 12, 14, 16, 18 mit Druckluft füllen kann, und zwar in jeder Drehstellung des Rades 12, 14, 16, 18. Die genaue Ausgestaltung der Druckluftanschlüsse 62, 64, 66, 68 ist der Detailansicht in Fig. 2 zu entnehmen.

Fig. 2 zeigt beispielhaft den Druckluftanschluss 64, der dem rechten Vorderrad 14 zugeordnet ist. Es wird angemerkt, dass bei der vorliegenden Ausführungsform alle vier vorhandenen Druckluftanschlüsse 62, 64, 66, 68 identisch konstruiert sind, so dass sich die folgenden Ausführungen im Zusammenhang mit Fig. 2 auch auf die verbleibenden, nicht dargestellten Druckluftanschlüsse 62, 66 und 68 beziehen.

Der Druckluftanschluss 64 umfasst einen flexiblen Druckluftschlauch 70, der auf eine Haspel 72 aufgewickelt in einem Staufach 74 im Unterboden des Kraftfahrzeugs 10 aufwickelbar ist und in einem Nichtbenutzungszustand auf diese Haspel 72 aufgewickelt im Staufach 74 vollständig verstaut ist. Das Staufach 74 ist nach unten, d.h. zum Boden 32 unter dem Kraftfahrzeug 10 hin zu öffnen. Seine Öffnung 76 ist durch eine schwenkbare Klappe 78 verschließbar.

Zum Aufpumpen des Reifes 14a des Rades 14 im Pannenfall wird die Klappe 78 geöffnet, und der flexible Druckluftschlauch 70 wird aus der Öffnung 76 nach unten aus dem Staufach 74 herausgezogen. Die Haspel 72 kann so eingerichtet sein, dass sie den Druckluftschlauch 70 selbsttätig einzieht und das Herausziehen des Druckluftschlauches 70 gegen eine Rotationsvorspannung der Haspel 72 erfolgt. Die Länge des Druckluftschlauchs 70 ist ausreichend, um von der Position des Druckluftanschlusses 64 aus das Reifenventil 14b des Reifes 14a in jeder Drehstellung des Rades 14 erreichen zu können. Das freie Ende des Druckluftschlauchs 70 ist an das Reifenventil 14b anschließbar.

Anschließend wird der Reifen 14a über den Druckluftanschluss 64 aufgepumpt. Hierzu wird der Druckluftanschluss 64, wie auch die übrigen Druckluftanschlüsse 62, 66 und 68, durch ein fahrzeugeigenes Druckluftsystem gespeist, das zur Versorgung verschiedener pneumatischer Betriebseinrichtungen des Kraftfahrzeugs 10 vorgesehen ist. Dieses fahrzeugeigene Druckluftsystem 40 ist vereinfacht in Fig. 1 dargestellt, weiter detailliert in dem Schema in Fig. 3. In der vorliegenden Ausführungsform umfasst das Kraftfahrzeug einen pneumatischen Bremskreis 44 sowie ferner eine pneumatische Luftfederungsanlage 46. Diese sind in Fig. 3 lediglich schematisch anhand ihrer Druckluftvolumina dargestellt. Sie werden durch einen gemeinsamen Kompressor 42 als Druckluftquelle gespeist. Der Kompressor 42 dient somit erfindungsgemäß nicht nur zur Versorgung der üblichen bekannten pneumatischen Betriebseinrichtungen des Kraftfahrzeugs, wie etwa des Bremskreises 44 und der Luftfederungsanlage 46, sondern darüber hinaus des erfindungsgemäßen Notfallsystems 60 und seiner Druckluftanschlüsse 62, 64, 66, 68.

In Fig. 1 ist lediglich der Kompressor 42 dargestellt, der durch individuelle, von einer Hauptleitung abzweigende Druckluftleitungen 80, 82, 84, 86 mit den Druckluftanschlüssen 62, 64, 66, 68 verbunden ist. Tatsächlich wird der Kompressor 42 in einer realen Ausführungsform über entsprechende Verteilerventile, Druckminderer und dergleichen, die Bestandteil des fahrzeugeigenen Druckluftsystems 40 sind, mit den Druckluftanschlüssen 62, 64, 66, 68 verbunden sein. In Fig. 3 ist dies beispielhaft anhand eines Verteilerventils 48 dargestellt, das die vom Kompressor 42 erzeugte Druckluft wahlweise auf eine oder mehrere Betriebseinrichtungen, also den Bremskreis 44, die Luftfederungsanlage 46 und/oder den Druckluftanschluss 64 (stellvertretend für alle Druckluftanschlüsse 62, 64, 66, 68) verteilt. Denkbar ist auch eine Stellung des Verteilerventils 48, in welcher der Kompressor 42 nicht betrieben wird und stattdessen Druckluft aus einem Druckluftreservoir des Bremskreises 44 oder einer Luftfederungsanlage 46 zu einem oder mehreren der Druckluftanschlüsse 62, 64, 66, 68 geleitet wird. Ein Überdruck in einem der Druckluftreservoirs kann somit zum Betrieb einer anderen pneumatischen Betriebseinrichtung genutzt werden. Zu diesem Zweck können auch Querverbindungen zum Druckluftaustausch zwischen dem Bremskreis 44, der Luftfederungsanlage 46 und den Druckluftanschlüssen 62, 64, 66, 68 vorgesehen sein, die geöffnet oder geschlossen werden können. Beispielsweise kann auch lediglich ein Bremskreis 44 oder eine Luftfederungsanlage 46 mit Druckluft vom Kompressor 42 aufgefüllt werden, und ein Druckluftanschluss 62 wird lediglich aus diesem Druckluftvorrat betrieben.

Zur individuellen Bedienung der Druckluftanschlüsse 62, 64, 66, 68 können verschiedene Möglichkeiten vorgesehen sein. Beispielsweise können die Druckluftanschlüsse 62, 64, 66, 68 einzeln von einem Fahrerplatz des Kraftfahrzeugs 10 aus bedienbar sein, also etwa vom Armaturenbrett aus (nicht dargestellt). Entsprechende Eingabeeinrichtungen, wie Schalter oder dergleichen, dienen zur Betätigung der Druckluftanschlüsse 62, 64, 66, 68. Die Druckluftanschlüsse 62, 64, 66, 68 können durch entsprechende Steuerleitungen mit dem Bedienstand am Fahrerplatz verbunden sein, beispielsweise auch über den Datenbus (zum Beispiel CAN) des Kraftfahrzeugs 10. Beispielsweise kann auch ein in die Fahrzeugelektronik integrierter Steuerrechner entscheiden, aus welcher Druckluftquelle die Druckluftanschlüsse 62, 64, 66, 68 gespeist werden, also unmittelbar vom Kompressor 42 aus oder durch ein Druckluftreservoir einer anderen pneumatischen Betriebseinrichtung, wie etwa des Bremskreises 44 oder der Luftfederungsanlage 46, wie oben dargestellt.

Abweichend von der in Fig. 2 dargestellten Ausführungsform kann das Staufach 74 zur Aufnahme des jeweiligen Druckluftschlauchs 70 auch seitlich am Kraftfahrzeug 10 angebracht sein, also etwa im Kotflügel 79 des Kraftfahrzeugs, in welchem eine seitliche Klappe zum Öffnen und Schließen des Staufachs 74 vorgesehen ist. Der Zugang zum Druckluftschlauch 70 wird hierdurch erleichtert. Aufgrund der Abdeckung durch die Klappe 78 ist die Beeinträchtigung des Erscheinungsbilds des Kraftfahrzeugs 10 nur minimal.

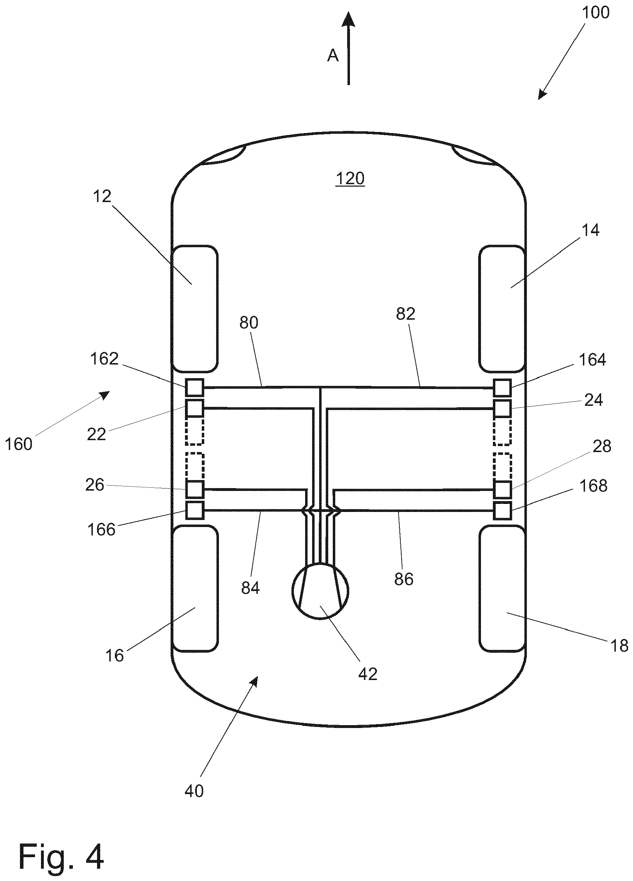

Fig. 4 zeigt eine schematische Draufsicht eines Kraftfahrzeugs 100, ähnlich dem Kraftfahrzeug 10 aus Fig. 1. Insbesondere weist auch das Kraftfahrzeug 100 Räder 12, 14, 16, 18 in der Anordnung gemäß Fig. 1 auf, die am Fahrgestell 120 des Kraftfahrzeugs 100 angebracht sind. Auch dieses Kraftfahrzeug 100 umfasst ein Notfallsystem 160 zur provisorischen Druckbeaufschlagung der Reifen der Räder 12, 14, 16, 18, welches mit dem Notfallsystem 60 des Kraftfahrzeugs 10, wie oben beschrieben, identisch ist. Dementsprechend sind auch hier vier Druckluftanschlüsse 162, 164, 166, 168 vorgesehen, wobei jeweils ein Druckluftanschluss 162, 164, 166, 168 einem Rad 12, 14, 16, 18 zugeordnet ist. Diese Zuordnung entspricht der Ausführungsform in Fig. 1. Auch dieses Notfallsystem 160 wird durch das fahrzeugeigene Druckluftsystem, also durch dessen Kompressor oder durch Druckluftreservoirs einzelner pneumatischer Betriebseinrichtungen des Kraftfahrzeugs 10 versorgt.

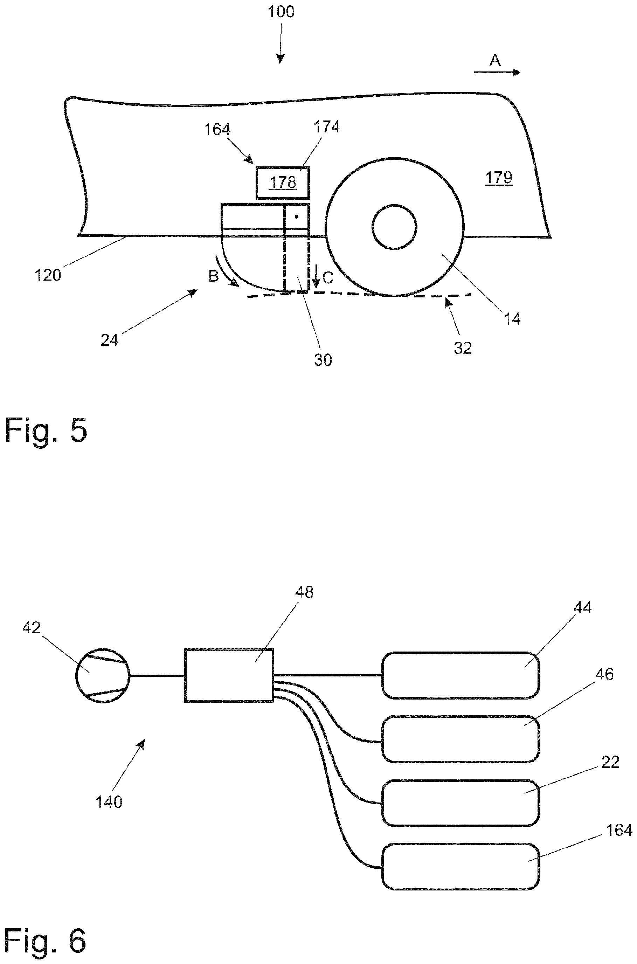

Zusätzlich zu jedem Druckluftanschluss 162, 164, 166, 168 ist jedem Rad 12, 14, 16, 18 ein pneumatischer Wagenheber 22, 24, 26, 28 zugeordnet, der Bestandteil des vorliegenden Notfallsystems 160 ist. Jeder der Wagenheber 22, 24, 26, 28 ist in das Fahrgestell 20 integriert und umfasst eine aus dem Fahrgestell 120 gegen den Boden 32 ausfahrbare Stütze, die das ihm zugeordnete Rad 12, 14, 16, 18 entlasten kann. Durch Drücken der Stütze gegen den Boden 32 wird das Fahrgestell 120 zusammen mit dem gesamten Kraftfahrzeug 100 angehoben. Dies ist beispielhaft in Fig. 5 dargestellt. Die Stütze 30 des dort gezeigten Wagenhebers 24 ist aus dem Fahrgestell 120 nach unten hin ausklappbar (Pfeil B) und teilweise nach unten ausfahrbar (Pfeil C). Auf diese Weise lässt sich die Stütze 30 gegen den Boden 32 drücken und hebt das Fahrgestell 120 zusammen mit dem Kraftfahrzeug 100 an. Im Nichtbenutzungszustand ist der Wagenheber 24 vollständig und zumindest von der Seite des Kraftfahrzeugs 100 her unsichtbar in den Unterboden des Kraftfahrzeugs 100 eingezogen.

Der Druckluftanschluss 164, der dem vorderen rechten Rad 14 und dem Wagenheber 24 zugeordnet ist, umfasst ein unmittelbar oberhalb des Wagenhebers 24 im Kotflügel 179 des Kraftfahrzeugs 100 vorgesehenes Staufach 174, das seitlich zu öffnen ist und durch eine Klappe 178 verschlossen ist. In diesem ist der Druckluftschlauch des Druckluftanschlusses 164 verstaut. Einzelheiten dieses Druckluftschlauches und seiner Funktion sollen hier nicht beschrieben werden und sind mit dem Drucklaufschlauch 70 aus Fig. 2 identisch. Die Anordnung aus Fig. 5 steht beispielhaft auch für die übrigen Druckluftanschlüsse 162, 166 und 168.

Die Wagenheber 22, 24, 26, 28 des hier dargestellten Notfallsystems 160 werden ebenfalls durch das fahrzeugeigene Druckluftsystem 140 gespeist, wie es in Fig. 6 schematisch dargestellt ist. Dieses Druckluftsystem 140 entspricht einer ergänzten Version des Druckluftsystems 40 aus Fig. 3, wobei zusätzlich ein Druckluftreservoir des Wagenhebers 22 dargestellt ist, welches stellvertretend für die Druckluftreservoirs aller Wagenheber 22, 24, 26, 28 steht, bzw. diese können auch ein gemeinsames Druckluftreservoir aufweisen. Wie auch bei der vorgehenden Ausführungsform, kann der Druckluftanschluss 164 (stellvertretend für alle Druckluftanschlüsse 162, 164, 166, 168) über ein Verteilerventil 48 durch einen Kompressor 42 mit Druckluft gespeist werden, ebenso wie der Bremskreis 44 und die Luftfederungsanlage 46. Zusätzlich wird jedoch auch der Wagenheber 22 (stellvertretend für alle Wagenheber 22, 24, 26, 28) mit Druckluft vom Kompressor 42 oder wahlweise durch die Druckluftreservoirs der anderen Betriebseinrichtungen, also des Bremskreises 44, der Luftfederungsanlage 46 oder des Druckluftanschlusses 164 gespeist, abhängig von den jeweiligen Druckluftvorräten. Es ist somit ein beliebiger Druckluftaustausch zwischen den Druckluftreservoirs denkbar. Analog zu der Darstellung in Fig. 3, können auch Querverbindungen zwischen den Druckluftreservoirs unabhängig vom Verteilerventil 48 vorgesehen sein. Dieses kann ein Mehrwegeventil sein oder durch eine Anzahl zusammengefasster Ventile repräsentiert werden. Auch in diesem Fall kann lediglich ein Druckluftreservoir des Bremskreises 44, der Luftfederungsanlage 46 oder des Druckluftanschlusses 164 vom Kompressor 42 aufgefüllt werden und der Wagenheber 22 wird lediglich aus diesem Druckluftvorrat betrieben.

Wie auch die Druckluftanschlüsse 162, 164, 166, 168, können Eingabeeinrichtungen zur Steuerung des beziehungsweise der Wagenheber 22, 24, 26, 28 an einem Bedienstand, also beispielsweise dem Armaturenbrett am Fahrerplatz des Kraftfahrzeugs vorgesehen sein. Es ist auch eine kombinierte Aktivierung der Wagenheber 22, 24, 26, 28 und der Drucklufteinrichtungen 162, 164, 166, 168 denkbar, derart, dass bei Betätigung des jeweiligen Wagenhebers 22, 24, 26, 28 dieser zunächst ausgefahren wird und gleichzeitig bzw. unmittelbar darauf der entsprechende Druckluftanschluss 164 mit Druckluft beaufschlagt wird.

## Patentansprüche

1. Kraftfahrzeug (10, 100), mit einem Fahrgestell (20, 120), einer Anzahl von Rädern (12, 14, 16, 18) mit Luftreifen (14a), die mit Reifenventilen (14b) zur Druckluftbeaufschlagung versehen sind, und einem fahrzeugeigenen Druckluftsystem (40, 140), eingerichtet zur Versorgung pneumatischer Betriebseinrichtungen des Kraftfahrzeugs (10, 100), einschließlich zumindest eines Bremskreises (44) und/oder einer Luftfederungsanlage (46), und einem Notfallsystem (60, 160) zur provisorischen Druckluftbeaufschlagung der Reifen im Pannenfall, umfassend eine Anzahl fest am Kraftfahrzeug installierter Druckluftanschlüsse (62, 64, 66, 68; 162, 164, 166, 168), von denen jeder einen flexiblen Druckluftschlauch (70) umfasst, dessen freies Ende an ein Reifenventil (14b) anschließbar ist und der in einem Nichtbenutzungszustand vollständig im Kraftfahrzeug (10, 100) verstaubar und daraus im Pannenfall herausziehbar ist und welcher durch das fahrzeugeigene Druckluftsystem (40, 140) gespeist wird, **dadurch gekennzeichnet, dass** das Notfallsystem (160) ferner eine Anzahl pneumatisch betriebener Wagenheber (22, 24, 26, 28) umfasst, von denen jeder Wagenheber (22, 24, 26, 28) in das Fahrgestell (120) integriert ist, eine aus dem Fahrgestell (120) gegen den Boden (32) ausfahrbare Stütze (30) umfasst und durch das fahrzeugeigene Druckluftsystem (140) angetrieben wird.

2. Kraftfahrzeug gemäß Anspruch 1, **dadurch gekennzeichnet, dass** das Notfallsystem (60, 160) eine Mehrzahl von Druckluftanschlüssen (62, 64, 66, 68; 162, 164, 166, 168) umfasst, die am Kraftfahrzeug (10, 100) verteilt angebracht sind und von denen jeweils ein Druckluftanschluss (62, 64, 66, 68; 162, 164, 166, 168) einem der Räder (12, 14, 16, 18) zugeordnet ist.

3. Kraftfahrzeug gemäß Anspruch 2, **dadurch gekennzeichnet, dass** das Kraftfahrzeug (10, 100) zwei in Fahrtrichtung (A) vordere rechte und linke Räder (12, 14) und zumindest zwei hintere rechte und linke Räder (16, 18) umfasst, und dass das Notfallsystem entsprechend vier Druckluftanschlüsse (62, 64, 66, 68; 162, 164, 166, 168) umfasst, die an den den jeweiligen Rädern (12, 14, 16, 18) entsprechenden Positionen vom rechts und links und hinten rechts und links am Kraftfahrzeug (10, 100) angeordnet sind.

4. Kraftfahrzeug gemäß einem der vorhergehenden Ansprüche, **dadurch gekennzeichnet, dass** die Druckluftanschlüsse (62, 64, 66, 68; 162, 164, 166, 168) jeweils ein Staufach (74, 174) zur Aufnahme des Druckluftschlauchs (70) umfassen, das durch eine Klappe (78, 178) verschließbar ist.

5. Kraftfahrzeug gemäß Anspruch 4, **dadurch gekennzeichnet, dass** das Staufach (74, 174) im Unterboden des Kraftfahrzeugs (10, 100) vorgesehen ist und nach unten hin zu öffnen ist.

6. Kraftfahrzeug gemäß Anspruch 4, **dadurch gekennzeichnet, dass** das Staufach (74, 174) in einem Kotflügel (79, 179) des Kraftfahrzeugs (10, 100) vorgesehen ist und seitlich zu öffnen ist.

7. Kraftfahrzeug gemäß einem der Ansprüche 5 oder 6, **dadurch gekennzeichnet, dass** der Druckluftschlauch (70) ein sich selbsttätig in das Staufach (74, 174) einziehender Schlauch ist.

8. Kraftfahrzeug gemäß einem der Ansprüche 5 oder 6, **dadurch gekennzeichnet, dass** der Druckluftschlauch (70) ein Spiralschlauch ist.

9. Kraftfahrzeug gemäß einem der vorhergehenden Ansprüche, **dadurch gekennzeichnet, dass** jeweils ein Wagenheber (22, 24, 26, 28) einem der Räder (12, 14, 16, 18) zugeordnet ist.

10. Kraftfahrzeug gemäß Anspruch 9, **dadurch gekennzeichnet, dass** der oder die Wagenheber (22, 24, 26, 28) in einem Nichtbenutzungszustand vollständig und zumindest von der Seite des Kraftfahrzeugs (10, 100) her unsichtbar in den Unterboden des Kraftfahrzeugs (10, 100) eingezogen ist bzw. sind.

11. Kraftfahrzeug gemäß einem der vorhergehenden Ansprüche, **gekennzeichnet durch** einen Fahrerplatz und einen am Fahrerplatz angeordneten Bedienstand für Betriebseinrichtungen des Kraftfahrzeugs (10, 100), welcher Eingabeeinrichtungen zur Steuerung des bzw. der Wagenheber(s) (22, 24, 26, 28) umfasst.

## Claims

1. Motor vehicle (10, 100) with a chassis (20, 120), a plurality of wheels (12, 14, 16, 18) with pneumatic tyres (14a) provided with tyre valves (14b) for pressurisation with compressed air, and an on-board compressed air system (40, 140) set up to supply pneumatic operating devices of motor vehicle (10, 100), including at least one brake circuit (44) and/or one air suspension system (46), and an emergency system (60, 160) for temporary pressurisation of the tyres in the event of a flat tyre, comprising a plurality of compressed air connections (62, 64, 66, 68; 162, 164, 166, 168) permanently installed on the motor vehicle, of which each one comprises a flexible compressed air hose (70) whose free end can be connected to a tyre valve (14b) and when not in use can be completely stored in the motor vehicle (10, 100) and extracted therefrom in the event of a flat tyre, and which is fed by the board compressed air system (40, 140), **characterised in that** the emergency system (160) also comprises a plurality of pneumatically operated jacks (22, 24, 26, 28), with each jack (22, 24, 26, 28) being integrated in the chassis (120), comprises a support (30) which can be extended from the chassis (120) towards the ground (32) and is driven by the on-board compressed air system (140).

2. Motor vehicle according to claim 1, **characterised in that** the emergency system (60, 160) comprises a plurality of compressed air connections (62, 64, 66, 68; 162, 164, 166, 168) which are distributed around the motor vehicle (10, 100) with each compressed air connection (62, 64, 66, 68; 162, 164, 166, 168) being attributed to one of the wheels (12, 14, 16, 18).

3. Motor vehicle according to claim 2, **characterised in that** the motor vehicle (10, 100) comprises two front right and left wheels (12, 14) in the direction of travel (A) and at least two rear right and left wheels (16, 18), and **in that** the emergency system accordingly comprises four compressed air connections (62, 64, 66, 68; 162, 164, 166, 168) disposed on the motor vehicle (10, 100) at the positions corresponding to the respective wheels (12, 14, 16, 18) at front right and left and rear right and left.

4. Motor vehicle according to one of the previous claims, **characterised in that** the compressed air connections (62, 64, 66, 68; 162, 164, 166, 168) each comprise a storage compartment (74, 174) to accommodate the compressed air hose (70), which can be closed by a flap (78, 178).

5. Motor vehicle according to claim 4, **characterised in that** storage compartment (74, 174) is provided in the floor of motor vehicle (10, 100) and is opened downwards.

6. Motor vehicle according to claim 4, **characterised in that** storage compartment (74, 174) is provided in a fender (79, 179) of motor vehicle (10, 100) and is opened sidewards.

7. Motor vehicle according to one of claims 5 or 6, **characterised in that** the compressed air hose (70) is a hose which self-retracts into storage compartment (74, 174).

8. Motor vehicle according to one of claims 5 or 6, **characterised in that** the compressed air hose (70) is a spiral hose.

9. Motor vehicle according to one of the previous claims, **characterised in that** each jack (22, 24, 26, 28) is attributed to one of the wheels (12, 14, 16, 18).

10. Motor vehicle according to claim 9, **characterised in that** the jack or jacks (22, 24, 26, 28), when not in use, is or are completely retracted into the floor of the motor vehicle (10, 100) in a way that is invisible, at least from the side of motor vehicle (10, 100).

11. Motor vehicle according to one of the previous claims, **characterised by** a driver's seat and a control station for operating devices of the motor vehicle (10, 100), disposed at the driver's seat, which comprises input devices for controlling the jack or jacks (22, 24, 26, 28).

## Revendications

1. Véhicule à moteur (10, 100), comportant un châssis (20, 120), un certain nombre de roues (12, 14, 16, 18) avec des pneumatiques (14a) munis de valves de pneumatiques (14b) pour appliquer de l'air comprimé, et un système à air comprimé (40, 140) propre au véhicule conçu pour alimenter des dispositifs d'actionnement pneumatiques du véhicule à moteur (10, 100), incluant au moins un circuit de freinage (44) et/ou un système de suspension pneumatique (46), et un système de secours (60, 160) pour appliquer temporairement de l'air comprimé aux pneumatiques en cas de panne, comprenant un certain nombre de raccords d'air comprimé (62, 64, 66, 68 ; 162, 164, 166, 168) installés de manière fixe sur le véhicule à moteur, chacun d'eux comprenant un tuyau d'air comprimé flexible (70) dont l'extrémité libre peut être raccordée à une valve de pneumatique (14b), qui peut être entièrement rangé dans le véhicule à moteur (10, 100) dans un état non utilisé et en être extrait en cas de panne et qui est alimenté par le système à air comprimé (40, 140) propre au véhicule, **caractérisé en ce que** le système de secours (160) comprend en outre une pluralité de crics (22, 24, 26, 28) actionnés pneumatiquement, chaque cric (22, 24, 26, 28) étant intégré dans le châssis (120), comprenant un support (30) pouvant être déployé contre le sol (32) à partir du châssis (120) et étant entraîné par le système à air comprimé (140) propre au véhicule.

2. Véhicule à moteur selon la revendication 1, **caractérisé en ce que** le système de secours (60, 160) comprend une pluralité de raccords d'air comprimé (62, 64, 66, 68 ; 162, 164, 166, 168) qui sont montés de manière répartie sur le véhicule à moteur (10, 100) et dont un raccord d'air comprimé (62, 64, 66, 68 ; 162, 164, 166, 168) est respectivement associé à l'une des roues (12, 14, 16, 18).

3. Véhicule à moteur selon la revendication 2, **caractérisé en ce que** le véhicule à moteur (10, 100) comprend deux roues avant droite et gauche (12, 14) et au moins deux roues arrière droite et gauche (16, 18) dans la direction de déplacement (A), et **en ce que** le système de secours comprend de manière correspondante quatre raccords d'air comprimé (62, 64, 66, 68 ; 162, 164, 166, 168) qui sont agencés aux positions avant droite et gauche et arrière droite et gauche correspondantes sur les roues (12, 14, 16, 18) respectives du véhicule à moteur (10, 100).

4. Véhicule à moteur selon l'une des revendications précédentes, **caractérisé en ce que** les raccords d'air comprimé (62, 64, 66, 68 ; 162, 164, 166, 168) comprennent respectivement un compartiment de rangement (74, 174) pour recevoir le tuyau d'air comprimé (70) qui peut être fermé par un clapet (78, 178).

5. Véhicule à moteur selon la revendication 4, **caractérisé en ce que** le compartiment de rangement (74, 174) est prévu dans le dessous de caisse du véhicule à moteur (10, 100) et doit être ouvert vers le bas.

6. Véhicule à moteur selon la revendication 4, **caractérisé en ce que** le compartiment de rangement (74, 174) est prévu dans un panneau d'aile (79, 179) du véhicule à moteur (10, 100) et doit être ouvert latéralement.

7. Véhicule à moteur selon l'une des revendications 5 ou 6, **caractérisé en ce que** le tuyau d'air comprimé (70) est un tuyau se rétractant automatiquement dans le compartiment de rangement (74, 174).

8. Véhicule à moteur selon l'une des revendications 5 ou 6, **caractérisé en ce que** le tuyau d'air comprimé (70) est un tuyau en spirale.

9. Véhicule à moteur selon l'une des revendications précédentes, **caractérisé en ce qu'**un cric (22, 24, 26, 28) est respectivement associé à l'une des roues (12, 14, 16, 18).

10. Véhicule à moteur selon la revendication 9, **caractérisé en ce que** dans un état non utilisé, le ou les crics (22, 24, 26, 28) est ou sont entièrement rentrés dans le dessous de caisse du véhicule à moteur (10, 100) de manière au moins invisible depuis le côté du véhicule à moteur (10, 100).

11. Véhicule à moteur selon l'une des revendications précédentes, **caractérisé par** un poste de conduite et un poste de commande agencé sur le poste de conduite pour des dispositifs d'actionnement du véhicule à moteur (10, 100), lequel poste de commande comprend des dispositifs d'entrée pour la commande du ou des crics (22, 24, 26, 28).
